# EUROPEAN PATENT APPLICATION

(11) **EP 1 445 171 A2**
(43) Date of publication of application: **11.08.2004**
(21) Application number: 04001578.6
(22) Date of filing: 26.01.2004
(51) Int. Cl.: B62D 5/04

(54) **Automotive steering system**

(30) Priority: 04.02.2003 JP 2003026676
(71) Applicant: HONDA MOTOR CO., Ltd., Tokyo (JP)
(72) Inventor: Shirakawa, Kunio, Wako-shi Saitama (JP); Mukai, Yoshinobu, Wako-shi Saitama (JP); Kitazawa, Hirokazu, Wako-shi Saitama (JP); Asaumi, Hisao, Wako-shi Saitama (JP); Kawano, Masaaki, Wako-shi Saitama (JP); Sugitani, Nobuo, Wako-shi Saitama (JP); Tsurumiya, Osamu, Wako-shi Saitama (JP)
(74) Representative: Herzog, Markus, Dipl.-Phys. Dr.

(57) **Abstract**

In an automotive steering system adopting steer-by-wire (SBW), in a state where a mechanical connection between a steering wheel 20 and a steering gear box 11 is interrupted, a steering motor 41 provided in the steering gear box 11 is driven so as to steer wheels, and a steering reaction motor 39 connecting to the steering wheel 20 is driven so as to impart a steering reaction force to the steering wheel 20. A clutch mechanism 32 is provided for providing a mechanical connection between the steering wheel 20 and the steering gear box 11, whereby when the steering motor 41 fails, the steering reaction motor 39 is driven with the clutch mechanism 32 being in engagement so as to steer the wheels.

## Description

### BACKGROUND OF THE INVENTION

The present invention relates to an automotive steering system in which, in a state where a mechanical connection between a steering wheel and a steering gear box is interrupted, an operating amount of the steering wheel is converted to an electric signal, so that a steering motor provided in the steering gear box is driven based on the electric signal so as to steer wheels, and a steering reaction motor connecting to the steering wheel is driven according to the operating amount so as to impart a steering reaction force to the steering wheel.

The automotive steering system of this type is known as a steer-by-wire (SBW) in, for example, in the following patent literature.

In the automotive steering system, since the steering wheel and the steering gear box are not connected to each other mechanically, there exists a possibility that when the steering motor fails, even if the steering wheel is operated, the wheels are not steered. To cope with this, in the automotive steering system according to the related art, a rotation control mechanism is disposed between the steering wheel and the steering gear box, so that when the steering motor functions properly, the mechanical connection between the steering wheel and the steering gear box is interrupted by the rotation control mechanism, whereas when the steeringmotor fails, themechanical connection between the steering wheel and the steering gear box is provided by the rotation control mechanism so as to enable the steering of the wheels.

### [Patent Literature]

JP-A-2001-80531

Incidentally, with the automotive steering system according to the related art, when the steering wheel and the steering gear box are mechanically connected to each other as a result of the failure of the steering motor, no steering assist torque is expected to be provided from the steering motor, and the wheels are steered only by a steering torque that is applied to the steering wheel by the driver, and therefore, this causes a problem that the operation of the steering wheel becomes heavy.

### SUMMARY OF THE INVENTLON

The invention is made in view of the situation, and an object thereof is to provide an automotive steering system adopting a steer-by-wire which enables the steering of the wheels with a light steering effort even when the steering motor fails.

With a view to attaining the object, according to a first aspect of the invention, there is provided an automotive steering system in which, in a state where a mechanical connection between a steering wheel and a steering gear box is interrupted, an operating amount of the steering wheel is converted to an electric signal, so that a steering motor provided in the steering gear box is driven based on the electric signal so as to steer wheels, and a steering reaction motor connecting to the steering wheel is driven according to the operating amount so as to impart a steering reaction force to the steering wheel, the automotive steering system comprising a clutch mechanism for providing a mechanical connection between the steering wheel and the steering gear box, whereby when the steeringmotor fails, the steering reaction motor is driven with the clutch mechanism being in engagement so as to steer the wheels.

According to the construction, in the event that steering motor fails which is driven based on the electric signal according to the operating amount of the steering wheel so as to steer the wheels, since the steering reaction motor for imparting a steering reaction force to the steering wheel is driven to steer the wheels in the state where a mechanical connection is provided between the steering wheel and the steering gear box by the clutch mechanism, the driver can be assisted in operating the steering wheel by a steering torque generated by the steering reaction motor so that the wheels canbe steeredwith a light operating effort without any problem.

Note that an electromagnetic clutch mechanism 32 in an embodiment corresponds to the clutchmechanismof the invention.

### BRIEF DESCRIPTION OF THE DRAWINGS

Fig. 1 is an overall viewof an automotive steering system.
Fig. 2 is an enlarged cross-sectional view of a portion indicated by reference numeral 2 in Fig. 1.
Fig. 3 is an explanatory view explaining the function of the automotive steering system, which corresponds to Fig. 2.

### DETAILED DESCRIPTION OF THE PREFERRRED EMBODIMENTS

A mode for carrying out the invention will be described below based on an embodiment according to the invention illustrated in the accompanying drawings.

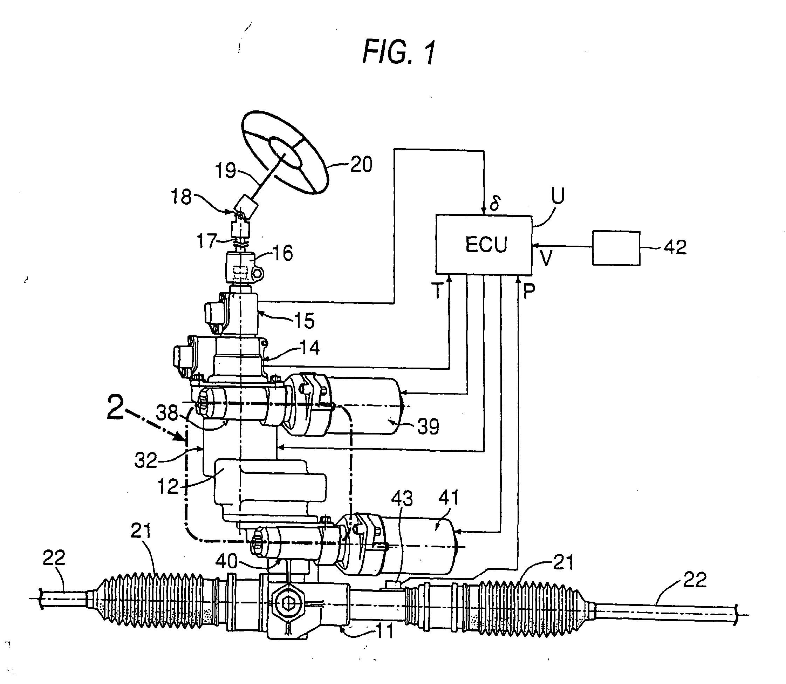

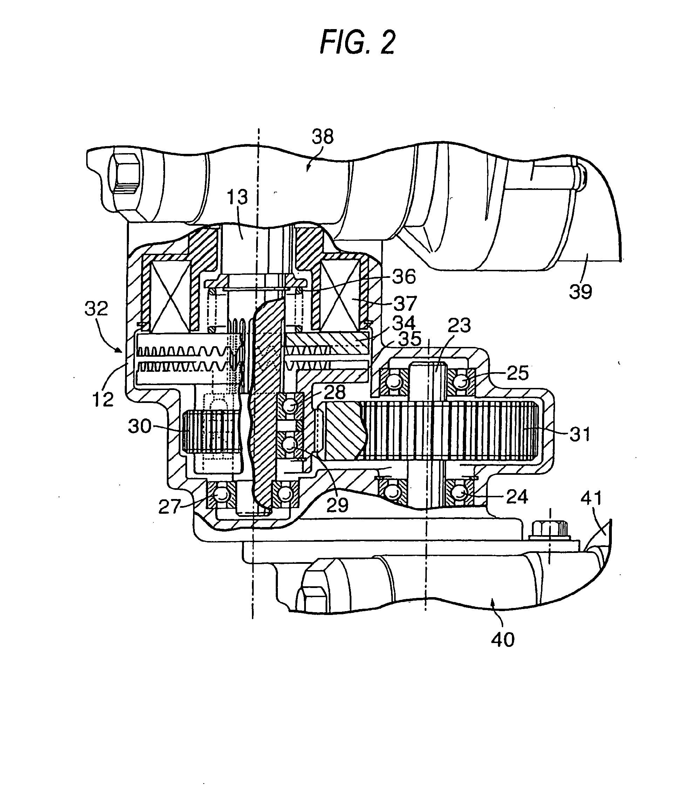

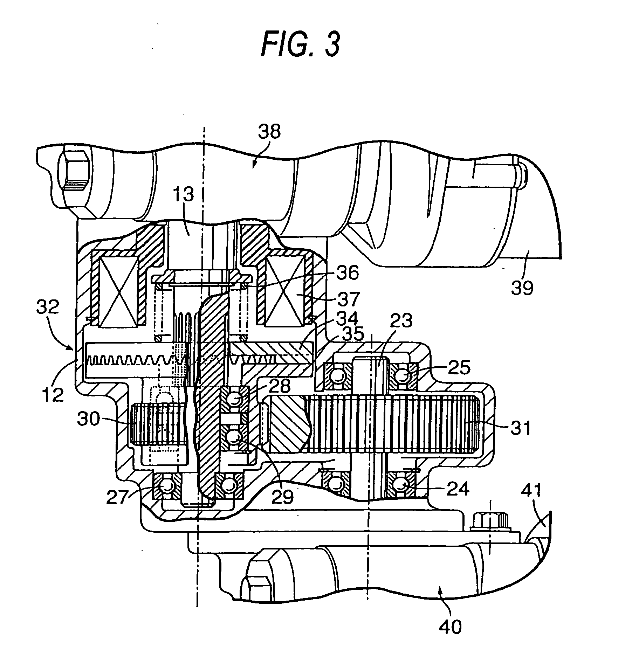

Figs. 1 to 3 show an embodiment of the invention, in which Fig. 1 is an overall view of an automotive steering system, Fig. 2 is an enlarged cross-sectional view of a portion of the automotive steering system which is indicated by reference numeral 2 in Fig. 1, and Fig. 3, which corresponds to Fig. 2, is an explanatory view describing a function of the automotive steering system.

As shown in Figs. 1 and 2, a housing 12 which is common to a front wheels steering system including a steering gear box 11 for steering front wheels of an automobile and a steering motor 41 and a steering reaction system provided above the front wheels steering system is provided integrally. An input shaft 13 is rotationally supported in an upper portion of the housing 12, and a steering torque sensor 14 and a steering angle sensor 15 are provided on an outer circumference of the input shaft 13 which extends upwardly from the housing 12. A joint 16, a lower steering shaft 17, a universal joint 18, an upper steering shaft 19 and a steering wheel 20 are connected sequentially in that order to an upper end of the input shaft 13 which protrudes from the steering angle sensor 15. Consequently, when the driver operates the steering wheel 20, the rotation of the steering wheel 20 is transmitted to the input shaft 13 via the upper steering shaft 19, the universal joint 18, the lower steering shaft 17 and the joint 16, and during the transmission a steering torque T inputted to the steering wheel 20 is detected by the steering torque sensor 14, and a steering angle θ through which the steering wheel 20 is operated is detected by the steering angle sensor 15.

On the. other hand, tie-rods 22, 22, which extend transversely through boots 21, 21 provided at end portions of the steering gear box 11 which is of a known rack-and-pinion type, connect to knuckles, not shown, of the front wheels. An output shaft 23 which extends upwardly from a pinion (not shown) accommodated in the interior of the steering gear box 11 is rotationally supported in the interior of the housing 12 via ball bearings 24, 25. A lower end of the input shaft 13 is rotationally supported via a ball bearing 27 in the interior of the housing 12, and a primary gear 30 rotationally supported on the input shaft 13 via two ball bearings 28, 29 meshes with a secondary gear 31 provided on the output shaft 23.

An electromagnetic clutch mechanism 32 provided on the input shaft 13 includes a primary clutch plate 34 supported by splines formed on an outer circumference of the input shaft 13 in such a manner as to slide axially, a coil spring 36 held on the outer circumference of the input shaft 13 for biasing the primary clutch plate 34 downwardly, a solenoid 37 for draw the primary clutch plate 34 upwardly and a secondary clutch plate 35 formed integrally on an upper portion of the primary gear 30 so as to face the primary clutch plate 34. Radial grooves capable of meshing with each other are formed in confronting surfaces of the primary and secondary clutch plates 34, 35.

The solenoid 37 is normally excited, and the primary clutch plate 34 moves upwardly against a spring-back force of the coil spring 36 so as to be spaced apart from the secondary clutch plate 35, whereby the connection between the input shaft 13 and: the primary gear 30 is interrupted. When the solenoid 37 is degaussed from this state, the primary clutch plate 34 moves downwardly by virtue of the spring-back force of the coil spring 36 to thereby mesh with the secondary clutch plate 35, whereby the input shaft 13 is connected to the primary gear 30. As a result, the rotation of the input shaft 13 is transmitted to the output shaft 23 by way of the electromagnetic clutch mechanism 32, the primary gear 30 and the secondary gear 31, and is then transmitted from the output shaft 23 to the steering gear box 11.

A steering reaction motor 39 is connected to the input shaft 13 via a worm gear mechanism 38 for imparting a steering reaction force to the steering wheel 20. In addition, a steering motor 41 is connected to the output shaft 23 via a worm gear mechanism 40 for assisting the driver in operating the steering wheel 20. The worm gear mechanisms 38, 40 are both reversible and can not only transmit the rotation of the steering reaction motor 39 and the steering motor 41 to the input shaft 13 and the output shaft 23, respectively, but also transmit the power in reverse directions.

An electronic control unit U is provided in the steering system for controlling the electromagnetic clutch mechanism 32 and the steering motor 41. A steering torque T and a steering angle δ are inputted into the electronic control unit U from the steering torque sensor 14 and the steering angle sensor 15, respectively, and a vehicle speed V and a rack position P are also inputted thereinto from a vehicle speed sensor 42 and a rack position sensor 43, respectively.

Next, the function of the steering systemof the embodiment that is constructed as has been described heretofore will be described below.

Firstly, the function of the steering system at a normal time when the steering motor 41 does not fail will be described. When the driver operates the steering wheel 20, a steering angle δ detected by the steering angle sensor 15 and a vehicle speed V detected by the vehicle speed sensor 42 are inputted into the electronic control unit U. The electronic control unit U drives the steering motor 41 so that, for example, a target steering angle for front wheels which is in proportion to a steering angle δ through which the steering wheel 20 has been operated is obtained or a rack position P outputted from the rack position sensor 43 becomes a predetermined position and rotates the output shaft 23, whereby the front wheels aresteered via the steering gear box 11. As this occurs, for example, when the vehicle speed V detected by the vehicle speed sensor 42 is great, the target steering angle.for the front wheels is decreased, whereas when the vehicle speed V is small, the target steering angle for the front wheels is increased so that the straight line stability of the vehicle is increased when driving at high speeds, whereas the treatment performance of the vehicle is increased when driving at low speeds, respectively.

At the normal time that has been described above, the electromagnetic clutch mechanism 32 is in a disengaged state (refer to Fig. 2), and no steering reaction force from the front wheels is applied to the steering wheel 20. Therefore, the steering reaction motor 39 is driven by a command from the electronic control unit U so as to impart a steering reaction force to the steering wheel 20. A steering reaction force (that is, a target steering torque) that is imparted then is set, for example, such that the target steering torque decreases as the steering angle δ increases. Then, the output of the steering reaction motor 39 is feedback controlled so that a steering torque T detected by the steering torque sensor 14 coincides with the target steering torque. Thus, a feeling of physical disorder felt by the driver specifically when steering the vehicle adopting the steer-by-wire can be eliminated by imparting a false steering reaction force to the steering wheel 20 by the steering reaction motor 39.

Next, the function of the steering system at an abnormal time when the steering motor 41 fails will be described. When the steering motor 41 fails and a normal operation is disabled, the electronic control unit U degausses the solenoid 37 of the electromagnetic clutch mechanism 32, whereby the primary clutch plate 34 comes to mesh with the secondary clutch plate 35 by virtue of the spring-back force of the coil spring 36, and then the input shaft 13 is connected to the primary gear 30 (refer to Fig. 3).

As a result, the rotation of the steeringwheel 20 resulting from the operation thereof by the driver is transmitted to the steering gear box 11 by way of the upper steering shaft 19, the universal joint 18, the lower steering shaft 17, the joint 16, the input shaft 13, the electromagnetic clutch mechanism 32, the primary gear 30, the secondary gear 31 and the output shaft 23 to thereby steer the front wheels, whereby the driving of the vehicle can be continued without any problem.

As this occurs, the steering reaction motor 39 is driven by the electronic control unit U so as to generate a steering torque for use in assisting the driver in operating the steering wheel 20 instead of the failed steering motor 41. Namely, the steering reaction motor 39 which generates a steering reaction force at the normal time generates a reverse torque so as to assist the driver in operating the steering wheel 20. The magnitude of the assist torque generated by the steering reaction motor 39 then is controlled such that, for example, the magnitude of the steering torque T detected by the steering torque sensor 14 coincides with the pre-set target steering torque.

As has been described heretofore, even if the steering motor 41 of the steering system of SBW type fails, the driver can be assisted in operating the steering wheel 20 with a light steering effort by allowing the steering reaction motor 39 to perform the function of the failed steering motor 41 to thereby reduce the load borne by the driver when operating the steering wheel 20. In addition, in the event that the steering reaction motor 39 fails, by driving the steering motor 41 through the engagement of the electromagnetic clutch mechanism 32, the normal function of the electric power steering system can be exhibited.

Thus, while the embodiment of the invention has been described heretofore, the invention can be modified variously with respect to design without departing from the spirit and scope of the invention.

For example, while, in the embodiment, the electromagnetic clutch mechanism 32 has been illustrated as a clutch mechanism, a hydraulic or mechanical clutch mechanism can be adopted.

In addition, while, in the embodiment, only the single electronic control unit U is provided, an electronic control unit for the steer-by-wire system and an electronic control unit for an electric power steering system can be provided separately.

As has been described heretofore, according to the first aspect of the invention, in the event that steering motor fails which is driven based on the electric signal according to the operating amount of the steering wheel so as to steer the wheels, since:the steering reaction motor for imparting a steering reaction force to the steering wheel is driven to steer the wheels in the state where a mechanical connection is provided between the steering wheel and the steering gear box by the clutch mechanism, the driver can be assisted in operating the steering wheel by a steering torque generated by the steering reaction motor so that the wheels can be steered with a light operating effort without any problem.

In an automotive steering system adopting steer-by-wire (SBW), in a state where a mechanical connection between a steering wheel 20 and a steering gear box 11 is interrupted, a steering motor 41 provided in the steering gear box 11 is driven so as to steer wheels, and a steering reaction motor 39 connecting to the steering wheel 20 is driven so as to impart a steering reaction force to the steering wheel 20. A clutch mechanism 32 is provided for providing a mechanical connection between the steering wheel 20 and the steering gear box 11, whereby when the steering motor 41 fails, the steering reaction motor 39 is driven with the clutch mechanism 32 being in engagement so as to steer the wheels.

## Claims

1. An automotive steering system in which, in a state where a mechanical connection between a steering wheel (20) and a steering gear box (11) is interrupted, an operating amount of the steering wheel (20) is converted to an electric signal,
the automotive steering system comprising:
a steering motor (41) provided in the steering gear box (11), the steering motor (41) being driven based on the electric signal so as to steer wheels,
a steering reaction motor (39) connecting to the steering wheel (20), the steering reaction motor (39) being driven according to the operating amount so as to impart a steering reaction force to the steering wheel (20), and
a clutch mechanism (32) for providing a mechanical connection between the steering wheel (20) and the steering gear box (11), wherein
when the steering motor (41) fails, the steering reaction motor (39) is driven with the clutch mechanism (32) being in engagement so as to steer the wheels.

2. The automotive steering system as set forth in claim 1, wherein
the clutch mechanism (32) is an electromagnetic clutch mechanism.

3. The automotive steering system as set forth in claim 1, wherein
the clutch mechanism (32) is a hydraulic clutch mechanism.

4. The automotive steering system as set forth in claim 1, wherein
the clutch mechanism (32) is a mechanical clutch mechanism.

5. The automotive steering system as set forth in claim 1, further comprising:
a single electronic control unit U.

6. The automotive steering system as set forth in claim 1, further comprising:
an electronic control unit for the steer-by-wire system and
an electronic control unit for an electric power steering system.
